# EUROPEAN PATENT APPLICATION

(11) **EP 4 524 722 A1**
(43) Date of publication of application: **19.03.2025**
(21) Application number: 23803357.5
(22) Date of filing: 18.04.2023
(51) Int. Cl.: G06F 8/30, G06F 8/60

(54) **SYSTEM CONSTRUCTION DEVICE**

(30) Priority: 13.05.2022 JP 2022079548
(71) Applicant: Hitachi Astemo, Ltd., Ibaraki 312-8503 (JP)
(72) Inventor: ITO Hiroki, Tokyo 100-8280 (JP)
(74) Representative: MERH-IP Matias Erny Reichl Hoffmann Patentanwälte PartG mbB
(86) International application number: PCT/JP2023/015440
(87) International publication number: WO 2023/218875

(57) **Abstract**

A system constructing device for constructing a system including an infrastructure resource and a setting value of the relevant infrastructure resource in a predetermined execution environment, the system constructing device including: an input section that inputs a request for a system construction satisfying a desired requirement; a system source code generating section that generates first source code defining a system satisfying the desired requirement; a deploying section that deploys and constructs the system in the execution environment on a basis of the request; a setting change detecting section that, when the system constructed in the execution environment is changed, detects a difference between second source code defining the relevant changed system and the first source code; and a setting change reflecting section that reflects the difference detected by the setting change detecting section in the first source code, the setting change reflecting section reflecting the difference in the first source code on a basis of a coding rule applied to the first source code.

## Description

### Technical Field

The present invention relates to a system constructing device that constructs a system in a predetermined execution environment.

### Background Art

Recently, with the development of a cloud computing technology, the virtualization of IT (Information Technology) resources has progressed. Due to the development of such a technology, attention has been directed to an automatic construction technology for a system that utilizes a virtualization technology of virtual servers, containers, and the like and IaC (Infrastructure as Code) for deploying the system on the basis of source code, a setting file, and the like.

According to a technology of Patent Literature 1, the technology is disclosed which converts an order sheet describing a system requirement into a source code on the basis of the order sheet, and automates the deployment of resources.

### Citation List

### Patent Literatures

Patent Literature 1: JP-2021-157612-A
Patent Literature 2: JP-2021-140372-A

### Summary of the Invention

### Problem to be Solved by the Invention

The use of the technology described in Patent Literature 1 enables automatic construction of a system according to the system requirement even in a case where a user does not have coding knowledge. Meanwhile, there is a problem in that, when the user changes the configuration of the deployed system without changing the source code, the source code of the target system and the configuration of the target system differ from each other.

With regard to this problem, Patent Literature 2 describes a technology that detects the presence or absence of a setting change in the system, and reflects the detected setting change in the source code.

Patent Literature 2 presents a problem in that apparatuses included in a construction target system are set as a monitoring target, and a change such as the addition of a new apparatus to the system cannot be reflected in the source code. In addition, a coding rule as a manner of writing the source code is often different depending on the user. Thus, depending on a method of the reflection in the source code, the coding rule of the corrected source code may lack consistency. Hence, it is necessary to make a correction such that the source code has consistency after the reflection with an objective of facilitating the management of the source code and the understanding of the user.

The present invention has been made in view of the problems as described above. It is an object of the present invention to correct a difference between the source code and the configuration of a system in a manner adjusted to a writing method of the user, including the addition of a new resource to the system, when a user changes the configuration of the system without changing the source code.

### Means for Solving the Problem

A system constructing device according to the present invention is a system constructing device for constructing a system including an infrastructure resource and a setting value of the relevant infrastructure resource in a predetermined execution environment, the system constructing device including: an input section that inputs a request for a system construction satisfying a desired requirement; a system source code generating section that generates first source code defining a system satisfying the desired requirement; a deploying section that deploys and constructs the system in the execution environment on the basis of the request; a setting change detecting section that, when the system constructed in the execution environment is changed, detects a difference between second source code defining the relevant changed system and the first source code; and a setting change reflecting section that reflects the difference detected by the setting change detecting section in the first source code, the setting change reflecting section reflecting the difference in the first source code on the basis of a coding rule applied to the first source code.

### Advantages of the Invention

According to the system constructing device in accordance with the present invention, when the user changes the configuration of the system without changing the construction information of the system, the difference between the construction information of the original system and the configuration of the changed system can be corrected in a manner in which the coding rule is unified.

### Brief Description of the Drawings

FIG. 1 is a diagram of a hardware configuration of a system constructing device 100 according to a first embodiment.
FIG. 2 is a function block diagram of the system constructing device 100 according to the first embodiment.
FIG. 3 is a flowchart of processing performed by the system constructing device 100 according to the first embodiment.
FIG. 4 is a diagram of assistance in explaining a concrete example of step S101 in the flowchart of FIG. 3.
FIG. 5A is a diagram of assistance in explaining a concrete example of step S102 in the flowchart of FIG. 3.
FIG. 5B is a diagram of assistance in explaining a concrete example of step S103 in the flowchart of FIG. 3.
FIG. 5C is a diagram of assistance in explaining a concrete example of step S103 in the flowchart of FIG. 3.
FIG. 6 is a diagram illustrating an example of system source code related to deployment processing in step S104 and step S105 in FIG. 3.
FIG. 7 is a flowchart of assistance in explaining a concrete example of steps S106 and S107 in the flowchart of FIG. 3.
FIG. 8 is a diagram of assistance in explaining a concrete example of a method of determining an existing setting value 282 referred to in step S202 in the flowchart of FIG. 7.
FIG. 9 is a flowchart of assistance in explaining a concrete example of step S209 in the flowchart of FIG. 7.
FIG. 10 is a flowchart of processing performed by a system constructing device 100 according to a second embodiment.

### Modes for Carrying Out the Invention

### <First Embodiment>

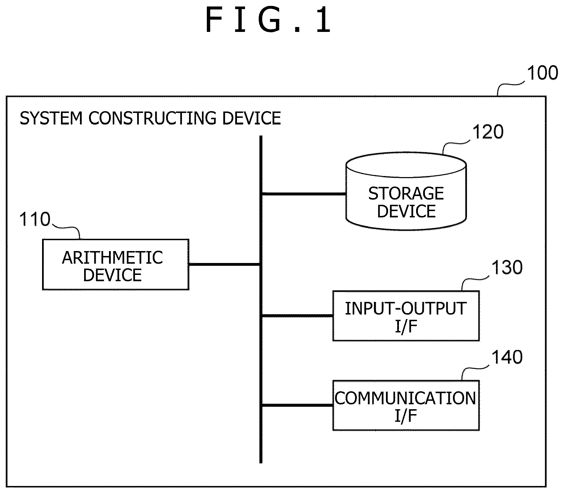

FIG. 1 illustrates an example of a hardware configuration of a system constructing device 100 according to the present embodiment. As illustrated in FIG. 1, the system constructing device 100 includes hardware such as an arithmetic device 110, a storage device 120, an input-output I/F (Interface) 130, and a communication I/F (Interface) 140.

The arithmetic device 110 is a CPU (Central Processing Unit), for example. The arithmetic device 110 exerts various functions to be described later by the processing of the CPU.

The storage device 120 includes a RAM (Random Access Memory) and a ROM (Read Only Memory), for example. The storage device 120 stores data used by the arithmetic device 110.

The input-output I/F 130 is, for example, a display having a touch panel function. The input-output I/F 130 displays, on a screen, a result of processing by the arithmetic device 110 and the user interface of a portal screen 210 to be described later.

The communication I/F 140 is, for example, a communication chip or a NIC (Network Interface Card). The communication I/F 140 is used for communication with an execution environment 280 and a user 201 to be described later.

When parts of the system constructing device 100 receive data, the data may be received via the input-output I/F 130, and the data may be received via the communication I/F 140.

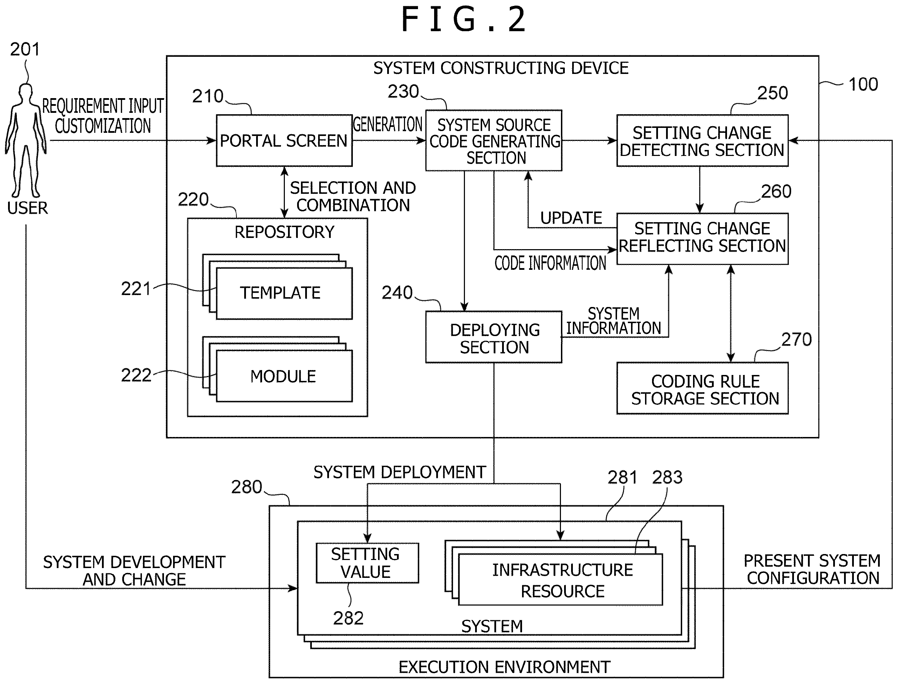

FIG. 2 is a functional block diagram illustrating an example of a configuration of functional sections possessed by the system constructing device 100. The system constructing device 100 includes the portal screen 210, a repository 220, a system source code generating section 230, a deploying section 240, a setting change detecting section 250, a setting change reflecting section 260, and a coding rule storage section 270.

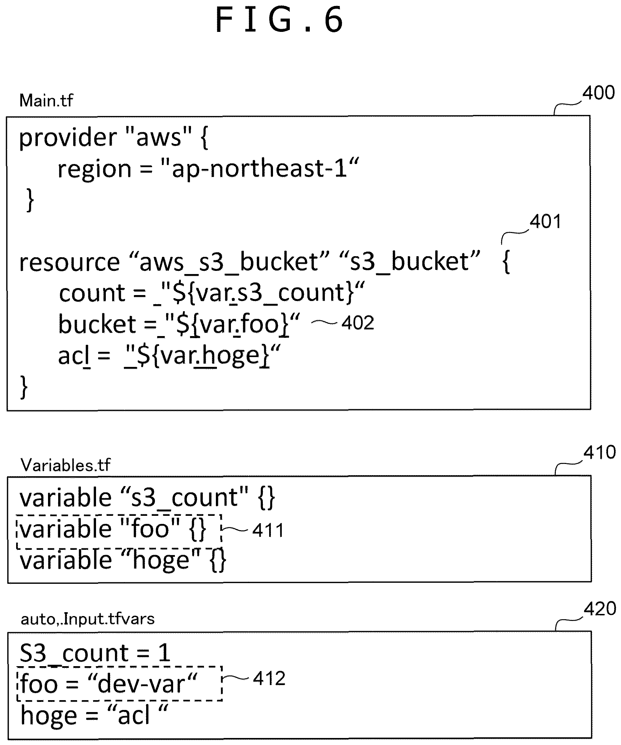

In the present embodiment, the source code of templates 221 and modules 222 for deployment is registered in the designated repository 220 in advance. An example of the repository 220 is GitHub (https://github.com/) in a case of cloud service or GitLab in a case of OSS. An example of the source code will be described later with reference to FIG. 6.

Incidentally, while FIG. 2 illustrates an example in which a plurality of templates 221 and modules 222 are managed in one repository 220, a configuration may be adopted in which the repository 220 is divided for respective source codes corresponding to a plurality of projects, respectively.

Here, the source code is utilized to construct a specific system 281. For example, not only a configuration in which one system 281 corresponds to one template 221 but also a module 222 as a set of functions constituting a part of the system 281 is included in the source code. At this time, the system source code of one system 281 is generated by combining a plurality of modules 222 with each other. Incidentally, various kinds of information for management and display on the present device 100 include the template 221 and the modules 222 as the source code for constructing the system 281, an entity or a reference of the system source code, and the like.

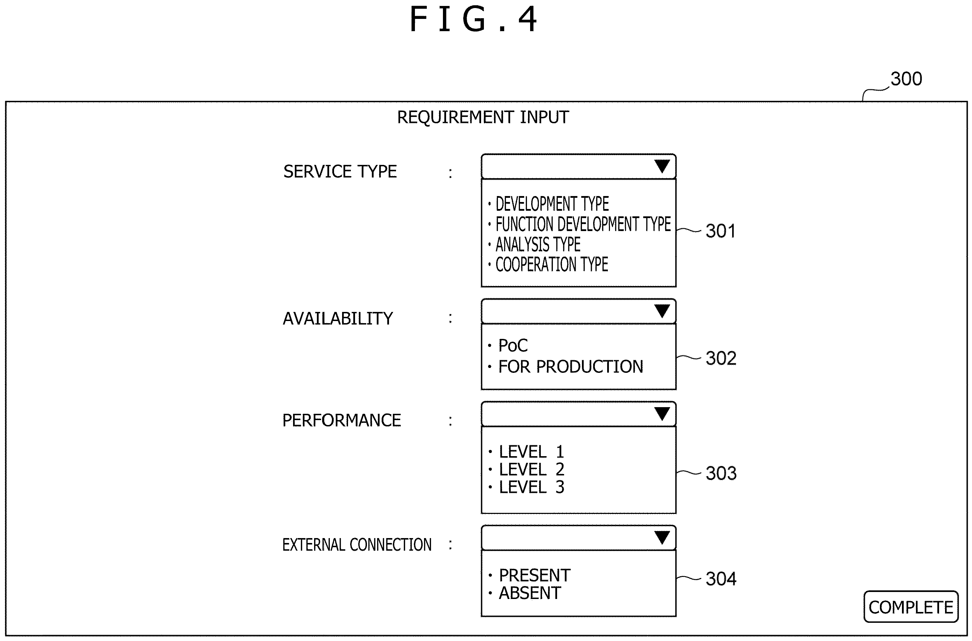

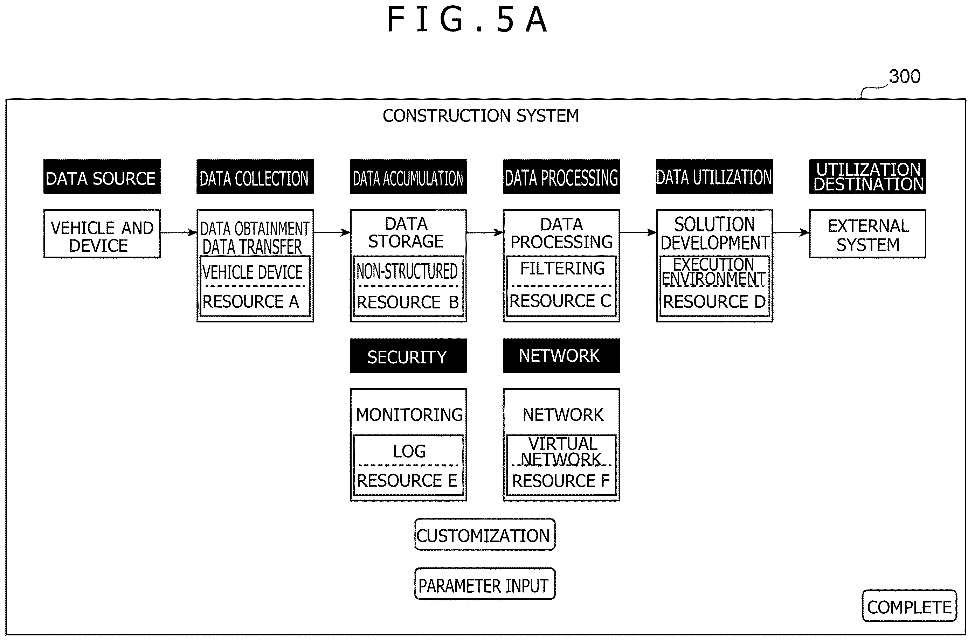

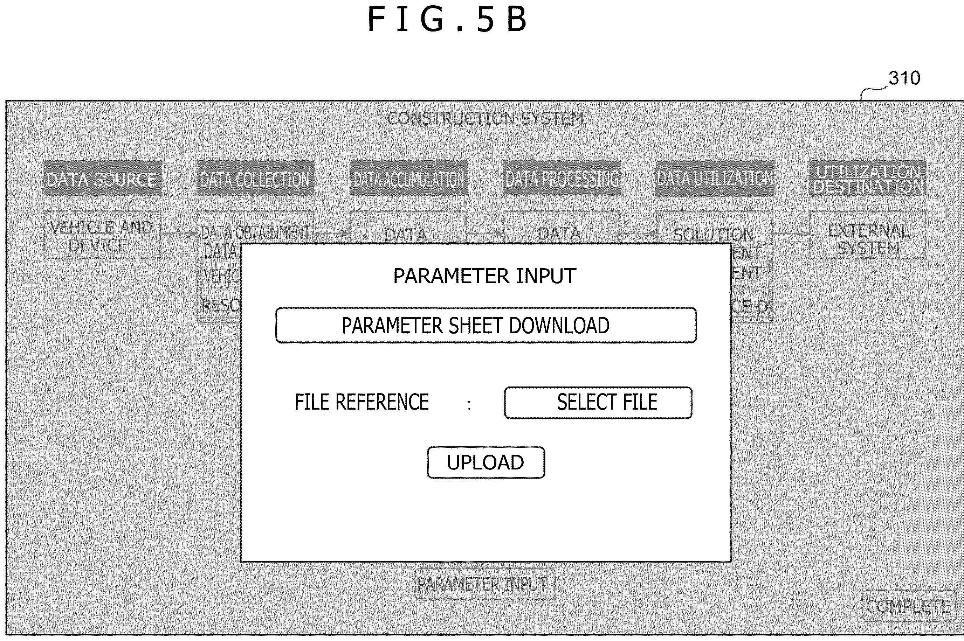

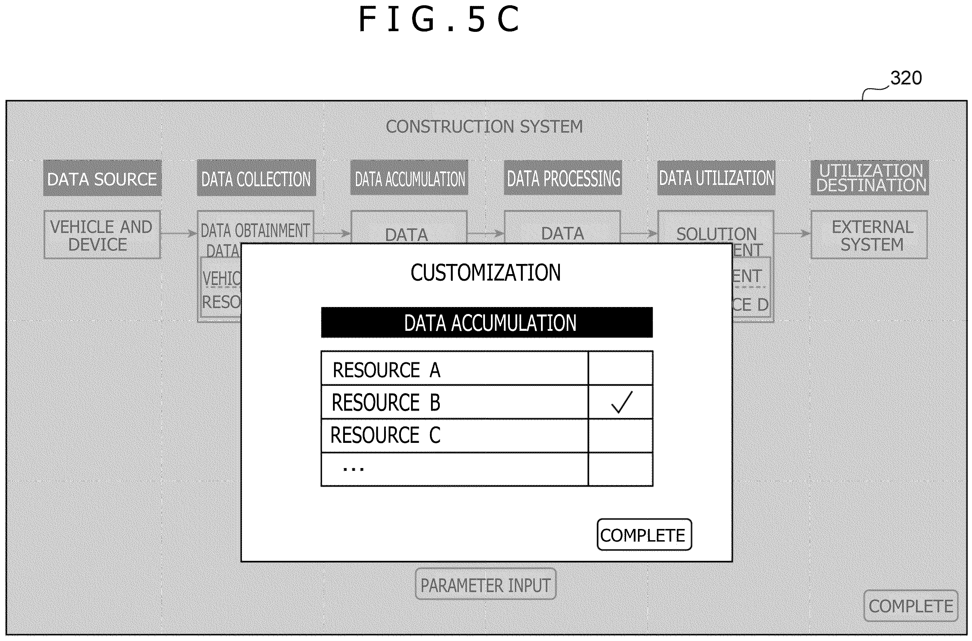

The system constructing device 100 displays the portal screen 210 on a display device not illustrated for the user 201 of the system constructing device 100. An example of the portal screen 210 will be described later with reference to FIG. 4 and FIG. 5. In addition, the portal screen 210 is mounted with a CPU not illustrated, and presents system candidates from the templates 221 and the modules 222 within the repository 220 according to a selection of a user, as will be described later.

The user 201 selects a system 281 desired to be constructed this time by using the portal screen 210. For example, the user 201 inputs a functional requirement and a non-functional requirement of cloud service, and a template 221 prepared in advance is presented. The template 221 is a service obtained by combining a public cloud service, a private cloud service, and the like satisfying each requirement on the basis of actual results in the past.

The non-functional requirement may include a requirement related to a network. Examples of the requirement related to the network include the presence or absence of usage of a public IP, the presence or absence of usage of a firewall, the presence or absence of usage of an encrypting function, and the like. However, the requirement related to the network is not limited to these, but may include various requirements related to the network.

The functional requirement may include information indicating which of a plurality of kinds of clouds the execution environment 280 used is. The functional requirement may include various requirements related to a purpose of the system 281 and an infrastructure in addition to the above-described requirement.

Thereafter, customization is performed by changing each infrastructure resource 283 of the presented template 221 to another infrastructure resource 283 capable of implementing similar functions, or adding or deleting an infrastructure resource 283. Then, after the customization, a system 281 desired to be constructed is selected by inputting, from a parameter sheet or the like, a setting value 282 needed by each infrastructure resource 283 for deployment.

When the user 201 selects the system 281 desired to be constructed, the system source code generating section 230 generates system source code by using the template 221 and the modules 222 of the selected system 281 from the repository 220.

After the generation of the system source code, the deploying section 240 performs processing of deployment in the execution environment 280. The execution environment 280 is an environment for operating the system 281. The execution environment 280 is, for example, a public cloud service, a private cloud service, a cluster of IT resources managed by an orchestration tool such as OpenStack or Kubernetes, or the like. In addition, the execution environment 280 in which the system 281 selected by the user 201 is operated may be in a form specified by the user 201. At this time, the execution environment 280 may be an execution environment different for each user 201, or may be in a form in which the one execution environment is shared.

As a result of the deployment processing being performed by the deploying section 240, the system 281 including the infrastructure resource 283, the setting value 282 of the infrastructure resource 283, and the like is constructed in the execution environment 280 on the basis of the system source code. Here, the infrastructure resource 283 may be one or a plurality of infrastructure resources according to the description of the system source code.

Then, the user 201 makes a necessary change to the constructed system 281 in the execution environment 280, and thereby performs development (change made to the system 281) suited to a purpose of the user 201.

The setting change detecting section 250 detects the presence or absence of a setting change in the system 281 as a construction target. When there is a setting change in the system 281, the setting change detecting section 250 detects and extracts setting change content as a difference between the configuration of the system 281 defined by the system source code generated by the system source code generating section 230 and the present system 281 in the execution environment.

The setting change reflecting section 260 reflects the difference detected by the setting change detecting section 250 in the system source code generated by the system source code generating section 230, on the basis of a coding rule stored in the coding rule storage section 270. Here, the coding rule includes, for example, a rule that, as a definition of a variable name, the variable name be derived from a standard variable name presented by each vendor, a rule that a variable of an ID or the like not be hard coded, and the like.

Incidentally, in figures and description in the following, description will be made by taking, for example, an IaaS (Infrastructure as a Service) public cloud of a public cloud service as the execution environment 280, Terrafrom as the deployment processing, and source code described in HCL (HashiCorp Configuration Language) defined by Terraform as the templates 221 and the modules 222. However, the present embodiment is not limited to the configuration described above. For example, a combination of Kubernetes as the execution environment 280, containers as a target for construction in the execution environment 280, and Helm as the deployment processing may be adopted.

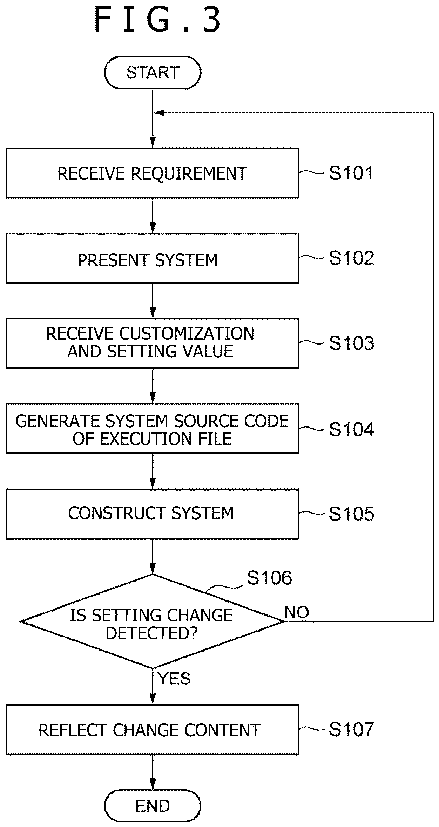

FIG. 3 is a flowchart illustrating an example of processing performed by the system constructing device 100 according to the first embodiment of the present invention. In the following, each step of FIG. 3 will be described. In addition, in the following, an outline of each step illustrated in FIG. 3 will be described, and details thereof will be described later.

The user 101 inputs a desired requirement (a functional requirement and a non-functional requirement) from the portal screen 210 (step S101).

A candidate for the system 281 that implements the input functional requirement and the input non-functional requirement is presented on the portal screen 210 (step 102).

The user 201 inputs information necessary to deploy the system 281 presented on the portal screen 210 (step S103). The necessary information is, for example, the setting value 282 of each infrastructure resource 283 included in the system 281. The setting value 282 includes, for example, the name of each infrastructure resource 283, a destination charged for a fee incurred by the adoption and operation of the infrastructure resource 283, and the like. In addition, the setting value 282 may be defined by a provider of each infrastructure resource 283. Further, the user 201 may change each infrastructure resource 283 to another infrastructure resource 283.

The system source code generating section 230 generates system source code by using, as input, the information of the infrastructure resource 283 included in the system 281 presented on the portal screen 210 and information necessary to deploy the system 281 (step S104).

The deploying section 240 constructs the system 281 in the execution environment 280 by using the system source code generated by the system source code generating section 230.

The setting change detecting section 250 monitors and detects whether or not the user 201 has directly changed the system 281. Then, when detecting a setting change, the setting change detecting section 250 detects and extracts changed content (step S106). The setting change detecting section 250 may detect by what method the content is changed. The setting change detecting section 250 may extract only a difference.

The setting change reflecting section 260 refers to the coding rule adopted by the system source code generating section 230, the coding rule being stored in the coding rule storage section 270, and reflects the difference extracted by the setting change detecting section 250 in the system source code. The processing is ended by completing the above steps.

FIG. 4 is a diagram of assistance in explaining a concrete example of a screen displayed on the portal screen 210 in step S101 in FIG. 3. As illustrated in FIG. 4, a requirement input screen 300 is displayed on the portal screen 210. The user 201 selects, on the portal screen 210, that is, on the requirement input screen 300, an objective desired to be achieved by the system 281, availability desired of the system 281, the performance of the system, and a network condition in operating the system.

FIG. 4 illustrates an example of displaying alternatives of a development type, an analysis type, and a cooperation type under an item of a service type 301 as the objective desired to be achieved by the system 281. When the user 201 changes the objective desired to be achieved by the system 281, the kind of the infrastructure resource 283 of the system 281 displayed on the portal screen 210 changes according to the objective. As a concrete example, the system 281 is designed so as to collect data and perform analysis when the analysis type is selected. Such automation enables the user 201 to reduce the number of man-hours normally involved in designing the system 281. The alternatives are an example, and may be other alternatives.

FIG. 4 illustrates an example of displaying, as the availability, alternatives for production and for PoC (Proof of Concept) under an item of availability 302. Incidentally, PoC refers to verification and demonstration in a stage preceding prototyping development with an objective of validating a new concept, a theory, a principle, or an idea. When the user 201 changes the availability, the configuration of the infrastructure resource 283 of the system 281 displayed on the portal screen 210 and the setting value 282 change according to the selected availability. As a concrete example, the system 281 is designed so as to be deployed in a distributed manner over a plurality of regions (for example, Tokyo and Osaka), and continue operating even when a disaster occurs in a certain region, when a selection for production is made. That is, redundancy is ensured. The alternatives are an example, and may be other alternatives.

FIG. 4 illustrates an example of displaying, as the performance, alternatives of a level 1, level 2, and a level 3 under an item of performance 303. When the user 201 changes the performance, the setting value 282 of the infrastructure resource 283 of the system 281 displayed on the portal screen 210 changes according to the performance. As a concrete example, when the level 3 is selected, the model number of the infrastructure resource 283 of the system 281 is set to be a most expensive model number. The alternatives are an example, and may be other alternatives.

FIG. 4 illustrates an example of displaying, as the network condition, the presence of an external connection and the absence of the external connection under an item of an external connection 304. When the user 201 changes the network condition, the infrastructure resource 283 and the setting value 282 related to a network connection of the system 281 displayed on the portal screen 210 change according to the network condition. As a concrete example, when the presence of the external connection is selected, the external connection is assumed, and a firewall is deployed as the network connection infrastructure resource. The alternatives are an example, and may be other alternatives.

The requirements displayed in FIG. 4 are an example, and may be other requirements. Further, in FIG. 4, a system 281 in the past may be displayed as an alternative in place of the objective desired to be achieved by the system 281. In that case, requirements at a time of deploying the system 281 in the past are input.

FIG. 5A is a diagram of assistance in explaining a concrete example of the processing performed in step S102 in FIG. 3. The system constructing device 100 presents, on the portal screen 210, a proposal of the system 281 that implements the functional requirement and the non-functional requirement input in step S101. The user 201 inputs information necessary to deploy the system 281 presented on the portal screen 210 (see FIG. 5B). Further, the user 201 may change each infrastructure resource 283 to another infrastructure resource 283.

FIG. 5B represents an example of a method of inputting the information necessary to deploy the system 281 presented on the portal screen 210 in step S103 in FIG. 3. When "parameter input" is selected in FIG. 5A, a screen 301 illustrated in FIG. 5B is displayed. Then, in the present embodiment, an example is illustrated in which an excel sheet describing various kinds of parameters necessary to deploy infrastructure resources selected in FIG. 5A is uploaded as a parameter sheet, and the setting value 282 needed by each infrastructure resource 283 is input.

FIG. 5C represents an example in a case of changing each service to another service in step S103 in FIG. 3. When "customize" is selected on the screen 300 of FIG. 5A, a screen 320 of FIG. 5C is displayed. In the present embodiment, an example is illustrated in which a resource storing data is changed. When the user selects another resource, a change is made to the resource selected by the user.

FIG. 6 is a diagram illustrating an example of the system source code related to the deployment processing in step S104 and step S105 in FIG. 3. In the present embodiment, description will be made of a case where Terrafrom is used for the deployment processing. Terraform is an open-source infrastructure automatic constructing tool developed by HashiCorp.

The template 221 generally includes source code such as main.Tf (400) defining what kind of infrastructure resource 283 is to be deployed, a variable file in a format such as variables.Tf (410) defining variables to be given to each infrastructure resource 283 and default values of the variables, and a variable input file in a format such as auto.input.tfvars (420) defining the setting values 282 of the variables to be given to each infrastructure resource 283.

For example, a description 401 ("resource "aws_s3_bucket" "s3_bucketʺʺ) denotes that "aws_s3_bucket" is to be deployed as a resource. In addition, a description 401 ("bucket = "$ {var.foo} "") denotes that a description 411 ("variable "foo" {} ") defined in variables.Tf (410) is to be read.

Then, at a time of the deployment processing, when no value is designated for a variable key "foo," "foo: 1" as a default value is used. Incidentally, at the time of the deployment processing, when another value, for example, a value "foo = "dev-var"" within auto.input.tfvars (420) is designated for the variable key "foo," the description 411 is generated as "foo: "dev-var"."

Further, the template file may include a programmatic element, for example, an if statement. Terraform defines usable programmatic elements, and a variable count enables control as to how many resources are constructed. When a value "S3_count = 1" is designated within auto.input.tfvars (420), one "resource "aws_s3_bucket" "s3_bucketʺʺ is generated. Thus, resources can be customized by controlling the count on the basis of the information input in FIG. 5B.

As described above, on the basis of the system source code generated in step S104, the deploying section 240 deploy the infrastructure resource 283 in the execution environment 280 by using the deployment tool.

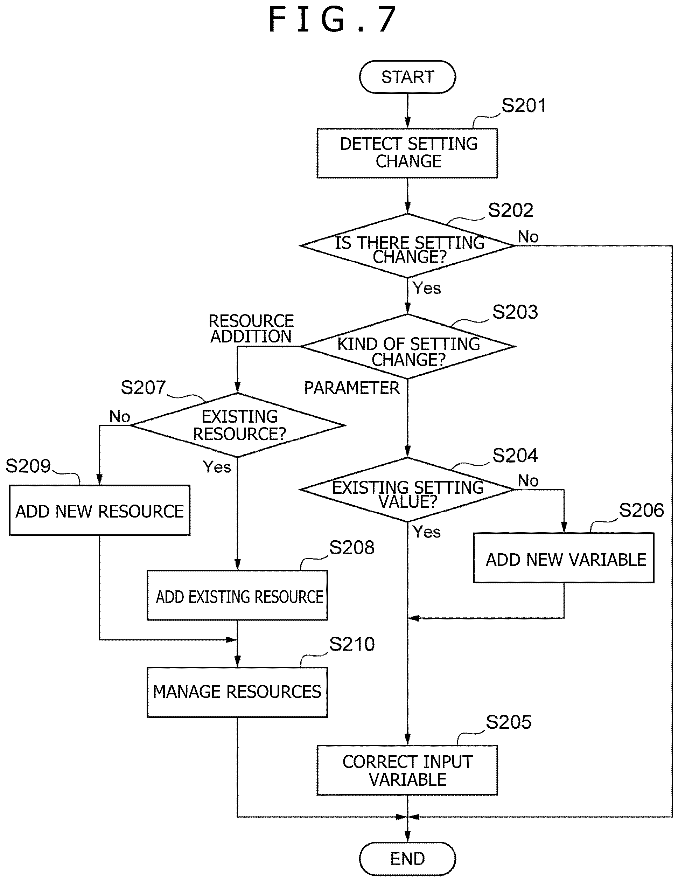

FIG. 7 is a flowchart illustrating an example of a concrete processing procedure in step S106 and step S107 in FIG. 3. In the following, each step of FIG. 7 will be described.

The setting change detecting section 250 detects that the user 201 has directly changed the system 281 in the execution environment 280 (step S201). As a concrete example, when the system 281 is constructed in step S105 in FIG. 3, reference source code is obtained by using a function of exporting the system 281 prepared by a cloud vendor as the source code of each cloud vendor, and thereafter a difference between the source code obtained by the exporting function and the reference source code may be sequentially obtained.

As a method for obtaining the difference, it is preferable to obtain the difference through exporting from the environment in which each system 281 is constructed, as described above. This is because each cloud vendor prepares metadata indicating the same system 281 as a standard, and it is thereby possible to detect the addition of a new apparatus to the system 281. In addition, the above-described detection is made possible also by adding metadata indicating the same system when the system 281 is constructed in step S105 in FIG. 2.

Next, the setting change detecting section 250 checks whether a setting change is detected (step S202). When a setting change is detected, the processing proceeds to step S203. When no setting change is detected, the processing is ended.

When there is a setting change ("Yes" in step S202), the setting change detecting section 250 checks the kind of the setting change (step S203). As the kind of the setting change, there are two kinds of setting changes including a setting change related to the infrastructure resource 283 and a setting change related to the setting value 282 of the infrastructure resource 283. As the setting change related to the infrastructure resource 283, there is a case where an infrastructure resource 283 is newly added or deleted. The setting change related to the setting value 282 of the infrastructure resource 283 represents a case of changing the setting value 282 of the infrastructure resource 283. When the setting change related to the infrastructure resource 283 is detected, the processing proceeds to step S207. When the setting change related to the setting value 282 of the infrastructure resource 283 is detected, the processing proceeds to step S204. Incidentally, the setting value 282 referred to here is the parameters described in the parameter sheet illustrated in FIG. 5B.

When the setting change is a change in the setting value 282, the setting change reflecting section 260 checks whether the setting change is a setting change related to an existing setting value 282 (step S204). The existing setting value 282 represents the setting value 282 already defined in the system source code. As an example, a case is assumed in which a VM (Virtual Machine) is set as the infrastructure resource 283. Incidentally, the VM refers to a virtual environment that is created on a physical hardware system (a location is off premises or on the premises), has its own CPU, memory, network interface, and storage, and functions as a virtual computer system.

Then, suppose that the size of the VM is set small in a part in which the VM is defined as system source code. When the user 201 thereafter manually changes the size of the VM to a medium, the size of the VM is the setting value 282 already defined as the system source code, and is therefore judged to be an existing setting value 282. In addition, when a setting value not defined as the system source code, that is, a tag of the VM, for example, is added, the setting value is a setting value 282 not defined as the system source code, and is therefore judged not to be an existing setting value 282. In the case of the setting change related to the existing setting value 282, the processing proceeds to step S205. The processing otherwise proceeds to step S206.

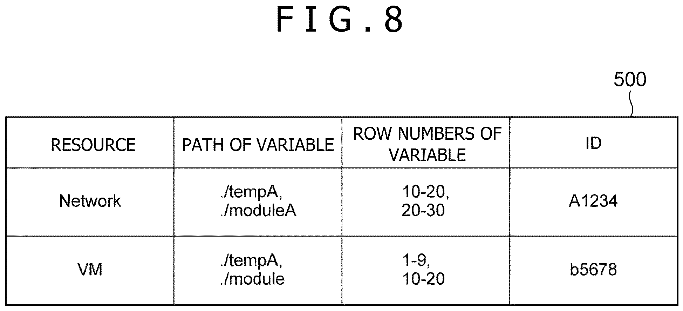

FIG. 8 is a diagram of assistance in explaining a concrete example of a method of determining the existing setting value 282 referred to in step S202. The system constructing device 100 has information as to which infrastructure resource 283 as system source code defines which variable. For example, when the infrastructure resource 283 is a VM, it is indicated that a certain variable is defined in a 1st to a 9th row of a path "./tempA," of the system source code, and is called in a 10th to a 20th row of a path "./module" of the system source code. This is used to retrieve and determine whether an existing setting value 282 exists by using, as input, the name of the infrastructure resource 283 and the variable name thereof detected as a difference.

When the setting change in the existing setting value 282 is detected, the setting change reflecting section 260 changes the present value of the setting value 282 in question to the setting value of the difference by using the information as to which infrastructure resource 283 as system source code defines which variable. It is thereby possible to correct the setting change on the basis of the original coding rule.

When no setting change in an existing parameter is detected, the setting change reflecting section 260 adds the setting value 282 in question as a new setting value to the system source code by using the information as to which infrastructure resource 283 as system source code defines which variable (step S206). Thereafter, the processing proceeds to step S205 to make a setting in the present setting value 282. It is thereby possible to correct the setting change on the basis of the original coding rule.

When the setting change is a change in the infrastructure resource 283, the setting change reflecting section 260 checks whether the setting change is a setting change related to an existing infrastructure resource 283 (step S207). The existing infrastructure resource 283 refers to an infrastructure resource 283 already defined in the system source code. As an example, when the infrastructure resource 283 of the VM is defined as system source code, and when the user 201 manually adds another VM, it is determined that the infrastructure resource 283 is an existing infrastructure resource 283. In addition, when a new VM not defined as the infrastructure resource 283 is added, it is determined that the infrastructure resource 283 is not an existing infrastructure resource 283. Further, even in a case where the added VM is not included in the current system source code, when the source code of the infrastructure resource 283 of the VM is included within the repository 220, it is determined that the infrastructure resource 283 is an existing infrastructure resource 283. In the case of the setting change related to an existing resource, the processing proceeds to step S208. The processing otherwise proceeds to step S209.

When the setting change in the existing resource is detected ("Yes" in step S207), the setting change reflecting section 260 adds the existing infrastructure resource 283 to the system source code (step S208). As a concrete example, the source code program of each infrastructure resource 283 registered in the repository 220 in advance is searched using the name of the added infrastructure resource 283 obtained as a difference. Then, the source code program of the identified infrastructure resource 283 is added to the system source code. Incidentally, while the addition of an existing resource has been described here, there is a case where the setting change is the deletion of a resource. In that case, it suffices to delete a part defining the corresponding resource within the source code program.

As described above, a part defining the infrastructure resource 283 used and parts defining and setting the setting value 282 of the infrastructure resource 283 exist in the source code program of the system source code. That is, when there is a change to the system source code, a part defining the infrastructure resource 283 of the registered source code program is added to the part defining the infrastructure resource 283 used within the system source code. In addition, a part defining a variable used in the registered source code program is added to the part defining the variable used in the infrastructure resource 283 within the system source code. Moreover, a part setting the setting value 282 used in the registered source code program is added to the part setting the setting value 282 used in the infrastructure resource 283 within the system source code.

Here, as for the part setting the setting value 282 used, it is necessary to associate a variable name of difference information and a variable name in the source code program with each other. A few associating methods have conventionally been proposed. For example, there are a method of manually associating the variable name output in the difference information and the variable name of the source code program with each other in advance, a method of calculating a degree of similarity between the variable name output in the difference information and the variable name of the source code program and performing the association, and the like. It is thereby possible to correct the setting change on the basis of the original coding rule.

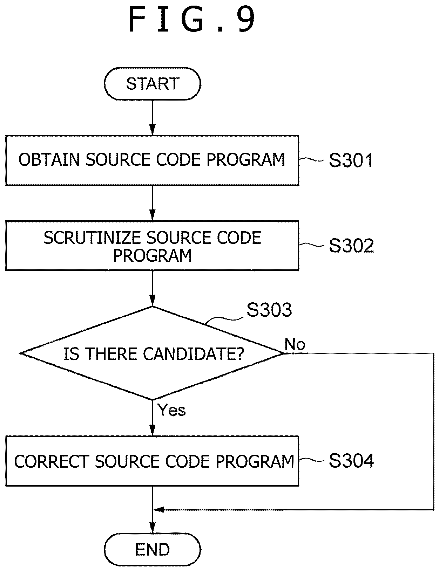

When no setting change in the existing resource is detected, that is, when the addition of a new infrastructure resource 283 is detected, the setting change reflecting section 260 obtains the source code program of the new infrastructure resource 283, makes a correction on the basis of the coding rule, and performs an addition (step S209). This processing will be described in detail with reference to FIG. 9. FIG. 9 is a flowchart illustrating an example of a concrete processing procedure in step S209. In the following, each step of FIG. 9 will be described.

The setting change reflecting section 260 retrieves, from the name of the infrastructure resource 283 included in the difference information, the source code program of the infrastructure resource 283 in question (step S301). In relation to this, as a concrete example, an API (Application Programming Interface) for search is disclosed in Terraform, and a search result can be obtained by adding a parameter for search to a specific URL. As an example, a resource having a name of "network" can be retrieved by performing a GET method for "https://registry.terraform.io/v1/modules/search?q = network." In addition, a shared repository managed by an organization that the user 201 belongs to may be set. Further, an example of the source code program may be obtained by Web scraping from a page describing the infrastructure resource in question and included in official pages of the infrastructure resource 283 in question.

The setting change reflecting section 260 scrutinizes the obtained source code program of the infrastructure resource 283 (step S302). As a concrete example, when there are a plurality of candidates for the source code program of the resource obtained in step S301, there is a possibility of the presence of a source code program not including the infrastructure resource in question among the candidates. Therefore, the source code programs of the plurality of candidates are analyzed to check whether the characters of the infrastructure resource in question are included. A source code program(s) not including the characters is (are) thereafter deleted from the candidates. In addition, the candidates may be scrutinized using metadata of the source code programs. As a concrete example, one having many stars indicating a degree of popularity of the source code program may be selected. It is thereby select one source code program from among the plurality of obtained source code programs.

Then, the setting change reflecting section 260 checks whether there is a candidate on the basis of the scrutiny performed in step S302 (step S303). When the number of candidates is 1, the processing proceeds to step S304. When the number of candidates is 0, the processing is ended.

When the number of candidates is 1 ("Yes" in step S303), the setting change reflecting section 260 corrects the one source code program selected by performing the scrutiny in step S302 (step S304). Here, the correction of the source code program refers to the rewriting of the obtained source code program on the basis of the coding rule designated by the user 201. As a concrete example of the coding rule, there is a method of converting the variable name of the source code program according to a naming rule designated by the user 201. This is because a setting item name is defined for the resource by a constructing tool, but a developer performs the naming of a variable name for the setting item name, so that the naming rule is not necessarily unified.

For the variable name in question, a code analysis of the source code program is performed. A few methods for the code analysis have conventionally been proposed. For example, the source code program is subjected to lexical analysis on the basis of the syntax of a programming language, and is converted into a token string. A conversion from the converted token string to a tree structure is performed. The variable name is checked on the basis of the tree structure as a conversion result, and a conversion is performed in accordance with the naming rule. As a concrete example, a resource name is added in front of the setting item name, and the names are connected to each other by an underbar. Alternatively, all are set as capital letters, for example.

In addition, as another example of the coding rule, there is one that adjusts a directory configuration to the original source code program. For example, there is a method in which each resource as a source code program is cut out as another source code program file, and a call is made with each as a module. In that case, the directory configuration differs between a method of making a call with the directory configuration as a module and a method of implementing the directory configuration by one source code program. In the case of the method of making a call with the directory configuration as a module, the obtained source code program is disposed in a module directory, and a part calling the obtained source code program is added to the original source code program.

The automatic addition of the source code program by the setting change reflecting section 260 has been described above. However, the method is not necessarily limited to the automatic addition. Besides, a notification may be given to the user 201 to prompt the user 201 to generate the source code program of a new resource, and the generated source code program may be obtained.

The system constructing device 100 according to the present embodiment detects a setting change in the system 281, and reflects the setting change in the system source code on the basis of the coding rule. By correcting the setting change on the basis of the coding rule, it is possible to manage the reflection of the setting change in the system 281 as the source code program assumed by the user 201. Hence, the system constructing device 100 does not impose extra man-hours for automatically performing the reflection in construction information in a case where the user 201 manually makes the setting change. In addition, it is not necessary to correct the automatic setting change on the basis of the own coding rule. It is therefore possible to suppress the man-hours of work of reflecting the setting change.

In addition, the system constructing device 100 according to the present embodiment allows the user 201 to input the functional requirement and the non-functional requirement of the system 281 on the portal screen 210, presents the system 281 satisfying the requirements, allows the user 201 to perform customization, and automatically constructs the system 281. Thus, the user 201 can generate the system 281 suited to the requirements even in a case where the user 201 does not have knowledge of the design of the system 281 and an automatic construction technology for the system 281.

### <Second Embodiment>

A system constructing device according to a second embodiment of the present invention will next be described. In the first embodiment, description has been made of an example of allowing the user 201 to input the functional requirement and the non-functional requirement of the system 281 on the portal screen 210, presenting the system 281 satisfying the requirements, and allowing the user 201 to perform customization. In the second embodiment, the requirement input screen is not displayed on the portal screen 210, but system construction is performed on the basis of system source code described by the user 201. Thus, the system 281 can be generated and managed on the basis of the system source code also in a case where the user 201 generates the system source code himself/herself because, for example, the user 201 is familiar with the automatic construction technology for the system 281.

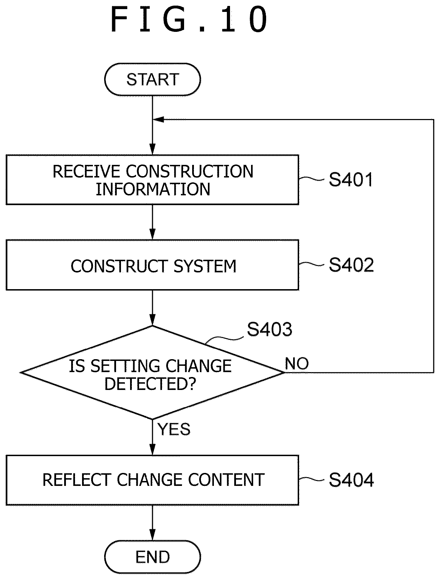

FIG. 10 is a flowchart of assistance in explaining a procedure for the system constructing device 100 to construct and manage a system in the present second embodiment. In the following, each step of FIG. 10 will be described.

The system constructing device 100 receives system source code from the user 201 (step S401). As a concrete example of a receiving method, a screen similar to that of FIG. 5B may be displayed on the portal screen 210 to allow the system source code to be uploaded. In addition, a text editor that allows the system source code to be described may be displayed on the portal screen 210 so that the user 201 directly describes the system source code.

The deploying section 240 performs the deployment processing on the basis of the system source code received in step S401 (step S402). This processing is similar to step S104 in FIG. 3. In the present embodiment, the deployment processing may be performed by the user. In that case, as an example of using Terrafrom, system construction is performed by using a Terrafrom construction command in the environment of the user.

Steps S403 and S404 are similar to steps S106 and S107 in FIG. 3. In the present embodiment, in a case where the user 201 performs the deployment processing, information related to the system 281 as a target for the detection of a setting change and construction information based on the system source code is input by the user, and the detection and reflection of the setting change are performed.

As described above, in the second embodiment of the present invention, system construction is performed on the basis of the system source code described by the user 201. Thus, the system can be generated and managed on the basis of the system source code also in a case where the user 201 desires to generate the system source code himself/herself because, for example, the user 201 is familiar with the automatic construction technology for the system.

The above-described embodiments of the present invention produce the following actions and effects. (1) A system constructing device according to the present invention is a system constructing device for constructing a system including an infrastructure resource and a setting value of the relevant infrastructure resource in a predetermined execution environment, the system constructing device including: an input section that inputs a request for a system construction satisfying a desired requirement; a system source code generating section that generates first source code defining a system satisfying the desired requirement; a deploying section that deploys and constructs the system in the execution environment on the basis of the request; a setting change detecting section that, when the system constructed in the execution environment is changed, detects a difference between second source code defining the relevant changed system and the first source code; and a setting change reflecting section that reflects the difference detected by the setting change detecting section in the first source code, the setting change reflecting section reflecting the difference in the first source code on the basis of a coding rule applied to the first source code.

With the configuration described above, when the user changes the configuration of the system without changing the construction information of the system, the difference between the construction information of the original system and the construction information of the changed system can be corrected in a manner in which the coding rule is unified.

(2) When the difference includes a change in the setting value, the setting change reflecting section corrects a setting value of the second source code on the basis of the coding rule, and corrects the first source code. In addition, when the difference includes addition of an infrastructure resource, the setting change reflecting section obtains source code of the added infrastructure resource, corrects the source code on the basis of the coding rule, and corrects the first source code. It is thereby possible to reflect the correction appropriately even when a change made to the source code of the system is any kind of change.

(3) The setting change detecting section determines whether or not the added infrastructure resource is a new infrastructure resource on the basis of metadata identifying the system. It is thereby possible to correct the source code appropriately even when the addition of a new resource not assumed in the conventional technology is performed.

(4) The input section includes a portal screen display unit, the requirement includes a functional requirement and a non-functional requirement, and the portal screen display unit presents, to the user, a candidate for the system satisfying the functional requirement or the non-functional requirement that is input. The user can thereby select the candidate with the functional requirement and the non-functional requirement isolated from each other, so that convenience is improved for the user. Further, because the candidate for the system is automatically selected and presented, it is possible to provide the user with awareness for adding a desired requirement or making a correction.

(5) The deploying section generates construction information for constructing the system selected by the user on the basis of a selection of the presented candidate for the system by a user, and constructs the system in the execution environment. It is thereby possible to achieve a quick system construction by utilizing information stored in the repository of the system constructing device.

The present invention is not limited to the foregoing embodiments, but includes various modifications. For example, the foregoing embodiments are described in detail to describe the present invention in an easily understandable manner, and are not necessarily limited to embodiments including all of the described configurations. In addition, a part of a configuration of a certain embodiment can be replaced with a configuration of another embodiment, and a configuration of another embodiment can be added to a configuration of a certain embodiment. In addition, for a part of a configuration of each embodiment, another configuration can be added, deleted, or substituted.

### Reference Signs List

100: System constructing device
210: Portal screen (an input section and a portal screen display unit)
220: Repository
230: System source code generating section
240: Deploying section
250: Setting change detecting section
260: Setting change reflecting section
270: Coding rule storage section
280: Execution environment
281: System
282: Setting value
283: Infrastructure resource

## Claims

1. A system constructing device for constructing a system including an infrastructure resource and a setting value of the relevant infrastructure resource in a predetermined execution environment, the system constructing device comprising:
an input section that inputs a request for a system construction satisfying a desired requirement;
a system source code generating section that generates first source code defining a system satisfying the desired requirement;
a deploying section that deploys and constructs the system in the execution environment on a basis of the request;
a setting change detecting section that, when the system constructed in the execution environment is changed, detects a difference between second source code defining the relevant changed system and the first source code; and
a setting change reflecting section that reflects the difference detected by the setting change detecting section in the first source code,
the setting change reflecting section reflecting the difference in the first source code on a basis of a coding rule applied to the first source code.

2. The system constructing device according to claim **1,** wherein,
when the difference includes a change in the setting value, the setting change reflecting section corrects a setting value of the second source code on the basis of the coding rule, and corrects the first source code.

3. The system constructing device according to claim **1,** wherein,
when the difference includes addition of the infrastructure resource, the setting change reflecting section obtains source code of the added infrastructure resource, corrects the relevant source code on the basis of the coding rule, and corrects the first source code.

4. The system constructing device according to claim **3,** wherein
the setting change detecting section determines whether or not the added infrastructure resource is a new infrastructure resource on a basis of metadata identifying the system.

5. The system constructing device according to claim 1, wherein
the input section includes a portal screen display unit, the requirement includes a functional requirement and a non-functional requirement, and the portal screen display unit presents, to a user, a candidate for the system satisfying the functional requirement or the non-functional requirement that is input.

6. The system constructing device according to claim 5, wherein
the deploying section generates construction information for constructing the system selected by the user on a basis of a selection of the presented candidate for the system by the user, and constructs the system in the execution environment.
